(19) Europäisches Patentamt
European Patent Office
Office européen des brevets

(11) EP 3 893 459 A1

# (12) EUROPÄISCHE PATENTANMELDUNG

(43) Veröffentlichungstag:
**13.10.2021 Patentblatt 2021/41**

(51) Int Cl.:
***H04L 29/06*** *(2006.01)*

(21) Anmeldenummer: **20169014.6**

(22) Anmeldetag: **09.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Anbarchian, Vida**
**10719 Berlin (DE)**

(72) Erfinder: **Homburg, Karl-Wilhelm**
**14193 Berlin (DE)**

(74) Vertreter: **Samson & Partner Patentanwälte mbB**
**Widenmayerstraße 6**
**80538 München (DE)**

## (54) TELEFONNUMMERVERIFIZIERUNG

(57) Die Erfindung umfasst ein Verfahren und ein Computerprogramm zum Ermitteln einer Herkunftstelefonnummer eines Telekommunikationsendgeräts und deren Zuordnung zu wenigstens einer Date, die im Rahmen einer Installation einer Anwendungssoftware auf einem Telekommunikationsendgerät an einem Server übermittelt wird oder mit einem Download der Anwendungssoftware verknüpft ist oder in der downgeloadeten Anwendungssoftware enthalten ist.

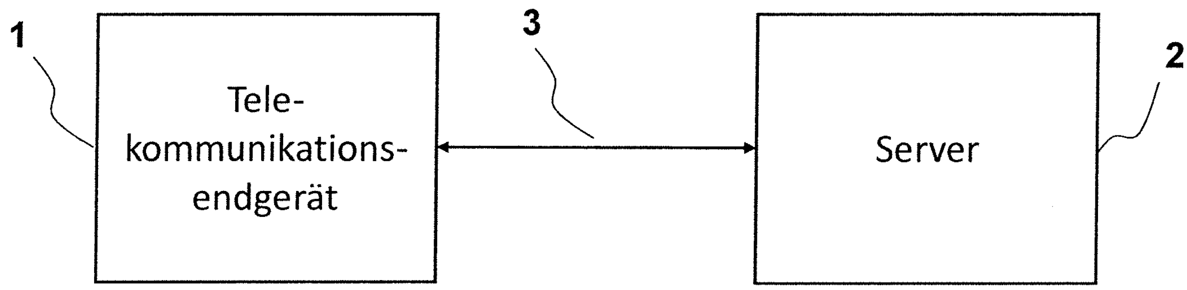


FIG. 1

EP 3 893 459 A1

## Beschreibung

Die vorliegende Erfindung die Verifizierung der Telefonnummer eines Telekommunikationsendgeräts nach einem vorangegangenen Download einer Anwendungssoftware, durch Ermitteln der Herkunftstelefonnummer des Telekommunikationsendgeräts und deren Zuordnung zu wenigstens einer Date.

## Hintergrund

Heutige Telekommunikationsendgeräte, wie beispielsweise Smartphones bieten die Möglichkeit, ein breites Spektrum von Anwendungssoftware wie etwa Applikationen auf diesen Endgeräten zu installieren und auszuführen. Solche Applikationen können in Kontakt mit verschiedenen, in den Rechnernetzen verteilten Diensten treten. Beispiele für solche Dienste sind Softwareanbieter, Online-Shops und soziale Netzwerke.

Im Rahmen dessen besteht das Bedürfnis seitens von Dienstanbietern für Anwendungssoftware wie Applikationen, die Mobiltelefonnummer des Benutzers und damit schließlich auch die Identität des Benutzers zu kennen, welcher beispielsweise eine Applikation von einem Server des Dienstanbieters auf sein mobiles Endgerät herunterlädt. Auf diese Weise können etwa betrügerische Aktivitäten im Zusammenhang mit der heruntergeladenen Applikation erschwert oder erkannt werden.

Telekommunikationsendgeräte wie Mobiltelefone sind im technischen Sinn nicht durch ihre Telefonnummer gekennzeichnet, sondern nur durch die Nummer ihrer SIM-Karte (sogenannte IMSI) und ihre Gerätenummer (sogenannte IMEI). Die nur aus Nutzersicht gegebene Telefonnummer ist dem Mobiltelefon nur durch den Netzbetreiber zugeordnet. Somit ist es einem Dienstanbieter in der Regel nicht möglich, über die IMSI oder die IMEI auf die Identität eines Benutzers schließen zu können.

Aus dem Stand der Technik sind beispielsweise Verfahren bekannt, nach der Installation der Applikation eine Kurznachricht, beispielsweise eine SMS (Short Message Service) zu versenden, auf die der Nutzer antworten muss. Dies setzt jedoch ein einwandfreies Funktionieren des SMS-Dienstes und i.a. ein nahezu unverzögertes Übertragen der SMS-Nachrichten voraus, was in manchen Weltregionen nicht sichergestellt ist. Zudem fallen bei Benutzung des SMS-Dienstes in der Regel Gebühren an. Dies kann für einen Nutzer unerwünscht sein, da dieser in der Regel nicht bereit ist, für derartige vorgenannte Verfahren im Rahmen einer Installation einer Anwendungssoftware gesondert Gebühren entrichten zu müssen.

Die bezeichneten Probleme in vorgenannten Stand-der-Technik werden durch das anspruchsgemäße Verfahren gelöst.

## Kurzfassung

Gemäß einem ersten Aspekt betrifft die Erfindung ein Verfahren zum Ermitteln einer Herkunftstelefonnummer eines Telekommunikationsendgeräts und deren Zuordnung zu wenigstens einer Date, die im Rahmen einer Installation einer Anwendungssoftware auf dem Telekommunikationsendgerät an den Server übermittelt wird oder mit einem Download der Anwendungssoftware verknüpft ist oder in der downgeloadeten Anwendungssoftware enthalten ist, durch einen Server, wobei das Verfahren umfasst:

- Auswählen einer Server-Telefonnummer zum Zwecke der durchzuführenden Zuordnung aus einer Menge von mehreren möglichen Server-Telefonnummern;
- Übermitteln der Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
- Detektieren einer vom Telekommunikationsendgerät an die Server-Telefonnummer gerichteten Sprachruf-Aufbauanfrage, wobei die Herkunftstelefonnummer mit der Sprachruf-Aufbauanfrage übermittelt wird;
- Zuordnen der mit der Sprachruf-Aufbauanfrage übermittelten Herkunftstelefonnummer zu der wenigstens einen Date.

Ein weiterer Aspekt betrifft ein Verfahren zum Übermitteln einer Herkunftstelefonnummer eines Telekommunikationsendgeräts an einen Server durch das Telekommunikationsendgerät, wobei das Verfahren umfasst:

- Empfangen einer von einem Server übermittelten Server-Telefonnummer;
- Absetzen einer an die Server-Telefonnummer gerichteten Sprachruf-Aufbauanfrage, wobei die Herkunftstelefonnummer mit der Sprachruf-Aufbauanfrage übermittelt wird und wobei Rufnummernübermittlung aktiviert ist.

Ein weiterer Aspekt betrifft Computerprogramm, umfassend Anweisungen zum Ausführen, wenn das Computerprogramm auf einem Telekommunikationsendgerät ausgeführt wird, eines Verfahrens zum Ermitteln einer Herkunftstelefonnummer des Telekommunikationsendgeräts, umfassend:

- Lesen einer von einem Server übermittelten Server-Telefonnummer;
- Absetzen einer an eine Server-Telefonnummer gerichteten Sprachruf-Aufbauanfrage, wobei die Herkunftstelefonnummer mit der Sprachruf-Aufbauanfrage übermittelt wird und wobei Rufnummernübermittelung aktiviert ist.

Im Folgenden werden Ausführungsbeispiele der Erfindung anhand der Zeichnungen näher erläutert.

Figur 1 zeigt eine schematische Darstellung der Beziehung zwischen einem Telekommunikationsendgerät und einem Server.

Figur 2 zeigt in einem Sequenzdiagramm gemäß einer ersten Ausführungsform aus der Perspektive des Servers.

Figur 3 zeigt in einem Sequenzdiagramm einer Weiterbildung der Ausführungsform von Figur 2, welches das Setzen eines Zeitfensters am Server umfasst, innerhalb dessen die serverseitige Bereitschaft zur Detektion einer Sprachruf-Aufbauanfrage besteht.

Figur 4 zeigt in einem Sequenzdiagramm einer Weiterbildung der Ausführungsform von Figur 3, welches das Setzen des Zeitfensters am Telekommunikationsendgerät umfasst, innerhalb dessen die Sprachruf-Aufbauanfrage an den Server abgesetzt wird.

Figur 5 zeigt ein Ablaufdiagramm für eine erneute Auswahl der Server-telefonnummer.

Figur 6 zeigt in einem Sequenzdiagramm einer anderen Weiterbildung der Ausführungsform von Figur 2 mit einer zweiten Server-Telefonnummer.

Figur 7 zeigt ein Sequenzdiagramm einer Weiterbildung der Ausführungsform von Figur 6 mit einer zweiten Server-Telefonnummer, welches das Setzen eines Zeitfensters am Server umfasst, innerhalb dessen die serverseitige Bereitschaft zur Detektion einer Sprachruf-Aufbauanfrage besteht, entsprechend Fig. 3.

Figur 8 zeigt ein Sequenzdiagramm einer Weiterbildung der Ausführungsform von Figur 7 mit einer zweiten Server-Telefonnummer, welches das Setzen des Zeitfensters am Telekommunikationsendgerät umfasst, innerhalb dessen die Sprachruf-Aufbauanfrage an den Server abgesetzt wird, entsprechend Figur 4.

Figur 9 zeigt ein Ablaufdiagramm für die erneute Auswahl der Server-Telefonnummer sowie einer zweiten Server-Telefonnummer.

Figur 10 zeigt ein Sequenzdiagramm des Verfahrens entsprechend der Ausführungsform von Figur 2, jedoch aus der Perspektive des Telekommunikationsendgeräts.

Figur 11 zeigt ein Sequenzdiagramm des Verfahrens entsprechend der Ausführungsform von Figur 3, wiederum aus der Perspektive des Telekommunikationsendgeräts.

## Ausführliche Beschreibung

In FIG. 1 ist eine schematische Darstellung einer Beziehung zwischen einem Telekommunikationsendgerät 1 und einem Server 2. Über eine Kommunikationsschnittstelle 3 ist eine Datenkommunikation zwischen dem Telekommunikationsendgerät 1 und dem Server 2 umfasst. In erfindungsgemäßen Ausführungsformen kann das Telekommunikationsendgerät 1 Mobilgeräte wie beispielsweise Smartphones, Tablet-PCs, Notebooks etc. und der Server 2 einen Großrechner oder mehrere, miteinander in Verbindung stehende Großrechner, aber auch jeden anderen Rechner wie z. B. Personal Computer umfassen. Die Kommunikationsschnittstelle 3 kann drahtgebundene oder drahtlose lokale Netzwerke (Local Area Network - LAN) oder drahtgebundene oder drahtlose Metropolitan Area Networks (MAN) oder drahtgebundene oder drahtlose Wide Area Networks (WAN) umfassen. Zusätzlich kann das Telekommunikationsendgerät 1 über das öffentliche Telefonnetz (Festnetz und/oder Mobilfunknetz) mit dem Server 2 kommunizieren.

FIG. 2 zeigt ein Sequenzdiagramm zum Ermitteln einer Herkunftstelefonnummer eines Telekommunikationsendgeräts und deren Zuordnung zu wenigstens einer Date aus der Perspektive des Servers 2. Eine Date wird in einer Aktivität 10 im Rahmen einer Installation einer Anwendungssoftware auf dem Telekommunikationsendgerät 1 an den Server 2 übermittelt. Die übermittelte Date kann beispielsweise die International Mobile Station Equipment Identity (IMEI) des Telekommunikationsendgerätes 2 oder die auf der SIM-Karte eines Telekommunikationsendgerätes 2 gespeicherte International Mobile Subscriber Identity (IMSI) umfassen, soweit die betreffenden Nummer dem Server 2 bekannt ist. Die Date kann auch mit einem Download der Anwendungssoftware verknüpft oder in der downgeloadeten Anwendungssoftware enthalten sein. Beispielsweise kann die Date eine laufende Nummer umfassen, die bei einem jeweiligen Download der Anwendungssoftware erzeugt wird oder die für eine laufende Kopie der Anwendungssoftware vergeben wird.

Die Übermittelung der Date kann automatisch geschehen, d. h. von dem Nutzer, der eine Anwendungssoftware auf einen Telekommunikationsendgerät installiert, werden keine durchzuführenden Handlungen erwartet.

Im Rahmen der Installation der Anwendungssoftware durch den Nutzer kann die Interaktion des Nutzers umfasst sein. Dem Nutzer, welcher die Anwendungssoftware beispielsweise auf seinem Smartphone installiert, wird im Rahmen des Installationsprozesses ein Link übermittelt, welcher, im Falle seines Anklickens, auf eine Webseite des Anbieters der Anwendungssoftware (z. B. Google-Store) führt, wo der Nutzer aufgefordert wird, beispielsweise seinen Namen oder die Telefonnummer seines Telekommunikationsendgerätes einzugeben.

In einer Aktivität 11 wählt der Server 2 im Rahmen der Installation der Anwendungssoftware (Aktivität 10) eine Server-Telefonnummer zum Zwecke der durchzuführenden Zuordnung der Herkunftstelefonnummer zu der wenigstens einen Date aus einer Menge von mehreren möglichen Server-Telefonnummern aus. Beispielsweise kann die Menge aus einer festen Anzahl fest vorgegebener Telefonnummern bestehen, welche dem Server 2 zugeordnet sind. Bei der Bildung der einzelnen Telefonnummern für die Menge kann beispielsweise analog zur Bildung von Telefonnummern für größere Organisationen, welche aus einer Vielzahl von Organisationseinheiten bestehen, verfahren werden. So kann etwa die Nummernfolge "01234" für den Server selbst, welcher dann analog zur Organisation selbst gesehen wird, vergeben werden und anschließend beispielsweise eine Nummer analog zu einer Organisationseinheit. Letztgenannte Nummer kann etwa aus einer aufsteigenden Nummernfolge beginnend bei "0000" und endend bei "9999", entnommen werden.

In einer Aktivität 12 wird die Server-Telefonnummer an das Telekommunikationsendgerät 1 über Datenkommunikation übermittelt. Die Übermittelung geschieht dabei aber nicht auf dem Wege eines Anrufs an das Telekommunikationsendgerät 1, sondern das Übermitteln findet im Rahmen der Installation der Anwendungssoftware auf dem Telekommunikationsendgerät 1 statt oder erfolgt mit dem Download der Anwendungssoftware. So kann beispielsweise dem Nutzer ein Link auf die Seite des Anbieters (z. B. Google-Store) der Anwendungssoftware auf das Telekommunikationsendgerät 1 übermittelt werden. Klickt der Nutzer auf seinem Telekommunikationsendgerät 1 dann diesem Link an, so wird die Server-Telefonnummer an das Telekommunikationsendgerät 1 übermittelt.

In einer Aktivität 13 detektiert der Server 2 eine vom Telekommunikationsendgerät 1 über das öffentliche Telefonnetz an die Server-Telefonnummer gerichteten Sprachruf-Aufbauanfrage, wobei die Herkunftstelefonnummer mit der Sprachruf-Aufbauanfrage übermittelt wird.

Das Telekommunikationsendgerät 1 kann bei einer Ausgestaltung der Ausführungsform der beschriebenen und in den Figuren dargestellten Ausführungsformen die Sprachruf-Aufbauanfrage an den Server ausführen, ohne dass seitens des Benutzers des Telekommunikationsendgerätes 1 eine Eingabe in das Telekommunikationsendgerät 1 erfolgen muss. Die Sprachruf-Aufbauanfrage geschieht also automatisch ohne Beteiligung des Benutzers.

In einer Aktivität 14 ordnet der Server 2 der mit der Sprachruf-Aufbauanfrage übermittelten Herkunftstelefonnummer zu der wenigstens einen Date zu, also beispielsweise der International Mobile Station Equipment Identity (IMEI) des Telekommunikationsendgerätes 1 oder der auf der SIM-Karte eines Telekommunikationsendgerätes 1 gespeicherte International Mobile Subscriber Identity (IMSI). Die Zuordnung kann auch beispielsweise zu der laufenden Nummer erfolgen, die bei einem jeweiligen Download der Anwendungssoftware erzeugt wird oder die für eine laufende Kopie der Anwendungssoftware vergeben wird.

FIG. 3 ist ein Sequenzdiagramm einer Weiterbildung der Ausführungsform von Figur 2 wiederum aus der Perspektive des Servers 2, wobei das Verfahren in einer Aktivität 15 weiter das Setzen eines Zeitfensters durch den Server 2 nach dem Übermitteln der Server-Telefonnummer an das Telekommunikationsendgerät 1, innerhalb dessen der Server 2 für das Detektieren der vom Telekommunikationsendgerät 1 an die Server-Telefonnummer gerichteten Sprachruf-Aufbauanfrage bereit ist, umfasst. Das Setzen des Zeitfensters umfasst hierbei das Setzen eines Zeitpunktes, ab dem das Zeitfenster zu laufen beginnt und das Setzen einer Dauer für das Laufen des Zeitfensters, oder eines Endzeitpunkts.

Das Setzen eines Zeitfensters durch den Server 2 stellt weitestgehend sicher, dass der Date die korrekte Herkunftstelefonnummer zugeordnet wird, also die Herkunftstelefonnummer desjenigen Telekommunikationsendgerätes 2, welches die Installation der Anwendungssoftware angefordert hat.

Die zu setzende Dauer für das Zeitfensters kann sich, aus der Analyse von Zeiträumen ergeben, welche sich in der Vergangenheit zwischen dem Übermitteln der Servertelefonnummern und den darauf folgenden Rufaufbauanfragen seitens der Telekommunikationsendgeräte 1 ergeben haben. Diese Zeiträume ergeben üblicherweise eine Gauß-Verteilung mit einem Erwartungswert und einer Varianz für die Zeiträume. So kann dann in einer Ausführungsform die zu setzende Dauer der Mittelwert der Gauß-Verteilung verwendet werden, zu welchem ein Vielfaches der Standartabweichung hinzuaddiert wird.

Die Formel für die Gauß-Verteilung für die vorgenannten Zeiträume ergibt sich zu:

$$f(\Delta t \mid \Delta t_m, \sigma) = \frac{1}{\sqrt{2\pi\sigma^2}} e^{\frac{-(\Delta t - \Delta t_m)^2}{2\sigma^2}}$$

Wobei $\Delta t_m$ den Erwartungswert für die Zeiträume und $\sigma^2$ die Varianz und $\sigma$ die Standardabweichung bezeichnet:

Die Dauer ergibt sich gemäß der vorgenannten Definition dann zu:

$$Dauer = \Delta t_m \cdot (fac \cdot \sigma)$$

wobei fac ein beliebiger Faktor sein kann, mit dem die Standartabweichung multipliziert werden kann.

Der Startpunkt für das Zeitfenster kann vorteilhaft gewählt werden, beispielsweise kann als Startpunkt der Zeitpunkt gewählt werden, bei welchen in der Aktivität 12 das Übermitteln der Server-Telefonnummer an das Telekommunikationsendgerät 1 durch den Server 2 erfolgt.

FIG. 4 einer Weiterbildung der Ausführungsform von Figur 3. Neben dem vorgenannten Setzen des Zeitfensters durch den Server 2 umfasst das in FIG. 4 gezeigte Verfahren zusätzlich in einer Aktivität 16 das Setzen des Zeitfensters beim Telekommunikationsendgerät 1, wobei das Übermitteln des entsprechenden Zeitpunktes und der entsprechenden Dauer für das Zeitfenster im Rahmen der Installation der Anwendungssoftware auf dem Telekommunikationsendgerät oder mit dem Download der Anwendungssoftware erfolgt. In dieser Ausführungsform bestimmt das Zeitfenster nicht nur den Startpunkt und die Dauer für die Bereitschaft der Servers 2 für die Detektion der Sprachruf-Aufbauanfrage, sondern der Startpunkt und die Dauer bestimmen auch für das Telekommunikationsendgerät 1 ein Zeitfenster, in dem eine Sprachruf-Aufbauanfrage durchzuführen ist.

Vorteilhaft sollte der Startpunkt für das Zeitfenster beim Telekommunikationsendgerät 1 dem Startpunkt für das Zeitfenster beim Server 2 entsprechen. Wird also für den Startpunkt für das Zeitfenster beim Server 2, wie vorstehend ausgeführt, der Zeitpunkt für das Übermitteln der Server-Telefonnummer durch den Server 2 an das Telekommunikationsendgerät 1 gewählt, so wird als Startpunkt für das Zeitfenster beim Telekommunikationsendgerät 1 der Zeitpunkt des Empfangs der Server-Telefonnummer gewählt, der sich in der Regel nur unwesentlich vom Zeitpunkt des Übermittelns der Server-Telefonnummer unterscheidet.

Die in der Aktivität 12 übermittelte Server-Telefonnummer kann erneut vergeben werden, damit diese nach dem Abschluss einer Verfahrensdurchführung wieder zur Verfügung steht. Dabei kann das Verfahren entweder das Ermöglichen der erneuten Auswahl der Server-Telefonnummer durch den Server umfassen, nachdem das Zeitfenster abgelaufen ist, unabhängig davon, ob die übermittelte Herkunftstelefonnummer zu der wenigstens einen Date zugeordnet worden ist, oder aber das Ermöglichen der erneuten Auswahl der Server-Telefonnummer durch den Server umfassen, nachdem die übermittelte Herkunftstelefonnummer der wenigstens einen Date zugeordnet worden ist, unabhängig davon, ob das Zeitfenster bereits abgelaufen ist.

FIG. 5 ist ein Ablaufdiagramm, das darstellt, nach welchen möglichen Situationen es zu einer erneuten Auswahl der bereits in Aktivität ausgewählten Server-Telefonnummer kommen kann. Konnte im Rahmen des erfindungsgemäßen Verfahrens eine Zuordnung der Herkunftstelefonnummer zu der Date erfolgen (Beantwortung der Abfrage 110 in FIG. 5 mit ‚ja"), so hat die in Aktivität 11 ausgewählte Server-Telefonnummer ihren Zweck erfüllt, ist somit wieder frei verfügbar und kann in einer Aktivität 111 wieder ausgewählt werden. War es hingegen nicht möglich, die Herkunftstelefonnummer der Date zuzuordnen (Beantwortung der Abfrage 110 in FIG. 5 mit "nein"), so ist nach Ablauf des Zeitfensters 112 die Server-Telefonnummer ebenfalls wieder frei und kann in einer Aktivität 113 ebenfalls wieder ausgewählt werden.

Im Falle des Nicht-Detektierens der an die Server-Telefonnummer gerichteten Sprachruf-Aufbauanfrage kann die Verfahrensdurchführung wiederholt werden (ohne Wiederholung der Installation der Anwendungssoftware oder des Downloads der Anwendungssoftware).

Um die Zuordnung der Date zu der Herkunftstelefonnummer gegenüber zufälligen Fehlzuordnungen oder Manipulationsversuchen sicherer zu machen, wird bei einer Ausgestaltung eine zweite Server-Telefonnummer übermittelt, wie in FIG. 6 gezeigt. In dieser Ausführungsform umfasst das Verfahren in den Aktivitäten 11 und 12-2 das Auswählen einer zweiten Server-Telefonnummer zum Zwecke der durchzuführenden Zuordnung aus einer Menge von mehreren möglichen Server-Telefonnummern sowie das Übermitteln der zweiten Server-Telefonnummer an das Telekommunikationsendgerät 1 über Datenkommunikation, nicht aber auf dem Wege eines Anrufs an das Telekommunikationsendgerät 1, wobei das Übermitteln im Rahmen der Installation der Anwendungssoftware auf dem Telekommunikationsendgerät oder mit dem Download der Anwendungssoftware erfolgt. Das Verfahren umfasst weiter das Detektieren einer vom Telekommunikationsendgerät 1 an die zweite Server-Telefonnummer gerichteten Sprachruf-Aufbauanfrage, wobei die Herkunftstelefonnummer mit der Sprachruf-Aufbauanfrage übermittelt wird sowie das Zuordnen der mit der Sprachruf-Aufbauanfrage übermittelten Herkunftstelefonnummer zu der wenigstens einen Date.

Im Sequenzdiagramm der FIG. 6 sind im Vergleich zu FIG. 3 zusätzliche Aktivitäten hinsichtlich des Auswählens und der Übermittelung einer zweiten Server-Telefonnummer gezeigt. Weitere Ausführungen, die oben im Zusammenhang mit den Figuren 1-5, und insbesondere mit Figur 3 gemacht wurden, treffen auch auf die das Ausführungsbeispiel von Figur 6 zu.

Die zweite Server-Telefonnummer ist von der ersten Server-Telefonnummer verschieden. In Aktivität 11 wird zusätzlich zu der ersten Server-Telefonnummer die zweite Server-Telefonnummer ausgewählt. Analog zur (ersten) Server-Telefonnummer kann die zweite Server-Telefonnummer aus einer Menge von mehreren möglichen Server-Telefonnummern ausgewählt werden. Diese Menge kann ebenfalls aus einer festen Anzahl fest vorgegebener Telefonnummern bestehen, welche dem Server 2 zugeordnet sind. Bei der Bildung der einzelnen Telefonnummern für die Menge kann, wie im Falle der (ersten) Server-Telefonnummer, analog zur Bildung von Telefonnummern für größere Organisationen, welche aus einer Vielzahl von Organisationseinheiten bestehen, verfahren werden. So kann etwa die Nummernfolge "01234" für den Server selbst, welcher dann analog zur Organisation selbst gesehen wird, vergeben werden und anschließend beispielsweise eine Nummer analog zu einer Organisationseinheit. Letztgenannte Nummer kann etwa aus einer aufsteigenden Nummernfolge beginnend bei "0000" und endend bei "9999", entnommen werden.

Bei 12 und 12-2 werden die die erste bzw. zweite Server-Telefonnummer an das Telekommunikationsendgerät 1 über Datenkommunikation übermittelt. Die Übermittelung geschieht dabei, wie bei Figur 3 ausgeführt, nicht auf dem Wege eines Anrufs an das Telekommunikationsendgerät 1, sondern das Übermitteln findet im Rahmen der Installation der Anwendungssoftware auf dem Telekommunikationsendgerät 1 statt oder erfolgt mit dem Download der Anwendungssoftware.

Bei 13 und 13-2 detektiert der Server 2 zwei vom Telekommunikationsendgerät 1 über das öffentliche Telefonnetz an die erste bzw. zweite Server-Telefonnummer gerichtete Sprachruf-Aufbauanfragen, wobei jeweils die Herkunftstelefonnummer mit der ersten bzw. zweiten Sprachruf-Aufbauanfrage übermittelt wird.

Bei 14 verifiziert der Server 2, ob hinsichtlich der beiden Herkunftstelefonnummern Konsistenz gegeben ist, d.h. ob die mit den beiden Sprachanruf-Aufbauanfragen übermittelten Herkunftstelefonnummern identisch sind. Bei positivem Ausgang dieser Konsistenzprüfung ordnet der Server 2 die mit den beiden Sprachruf-Aufbauanfragen übermittelte Herkunftstelefonnummer der wenigstens einen Date zu, also beispielsweise der International Mobile Station Equipment Identity (IMEI) des Telekommunikationsendgerätes 1 oder der auf der SIM-Karte eines Telekommunikationsendgerätes 1 gespeicherte International Mobile Subscriber Identity (IMSI). Die Zuordnung kann auch beispielsweise zu der laufenden Nummer erfolgen, die bei einem jeweiligen Download der Anwendungssoftware erzeugt wird oder die für eine laufende Kopie der Anwendungssoftware vergeben wird.

In einer weiteren Ausgestaltung kann auch das Setzen eines Zeitfensters bei der Übermittelung von zwei Server-Telefonnummern umfasst sein. In dieser Ausführungsform umfasst das erfindungsgemäße Verfahren das Setzen eines oder zweier Zeitfenster durch den Server.

Weitere Ausführungen, die oben im Zusammenhang mit den Figuren 1-6 gemacht wurden, treffen auch auf dieses Ausführungsbeispiel mit zwei anzurufenden Server-Telefonnummern und Zeitfenster(n) zu.

Bei einer Variante wird ein gemeinsames Zeitfenster nach dem Übermitteln der beiden Server-Telefonnummern an das Telekommunikationsendgerät 1, innerhalb dessen der Server für das Detektieren der vom Telekommunikationsendgerät 1 an die beiden Server-Telefonnummern gerichteten Sprachruf-Aufbauanfragen bereit ist, und wobei das Setzen des Zeitfensters das Setzen eines Zeitpunktes, ab dem das Zeitfenster zu laufen beginnt und das Setzen einer Dauer für das Laufen des Zeitfensters, oder das Setzen eines Endzeitpunkts umfasst.

Bei einer anderen Variante werden zwei gesonderte Zeitfenster nach dem Übermitteln der jeweiligen Server-Telefonnummer an das Telekommunikationsendgerät 1 gesetzt, innerhalb deren der Server für das Detektieren der vom Telekommunikationsendgerät 1 an die erste bzw. zweite Server-Telefonnummer gerichtete Sprachruf-Aufbauanfrage bereit ist, und wobei das Setzen des jeweiligen Zeitfensters das Setzen eines Zeitpunktes, ab dem das jeweilige Zeitfenster zu laufen beginnt und das Setzen einer Dauer für das Laufen des jeweiligen Zeitfensters, oder das Setzen eines Endzeitpunkts für das jeweilige Zeitfenster umfasst.

Im Sequenzdiagramm von FIG. 7 ist die Variante mit einem gemeinsamen Zeitfenster veranschaulicht. Das Setzen des Zeitfensters erfolgt in 15. Anlog wie zu dem vorgenannten Ausführungsformen kann die Dauer des Zeitfensters aus einer Gauß-Verteilung über diejenigen Zeiträume ermittelt werden, welche sich in der Vergangenheit zwischen dem Übermitteln der Server-Telefonnummern und den darauf folgenden Rufaufbauanfragen seitens der Telekommunikationsendgeräte 1 ergeben haben.

Das Setzen des Startpunktes für das Zeitfenster kann beispielsweise nach dem Übermitteln der zweiten Server-Telefonnummer in Aktivität 12-2 der FIG. 7 erfolgen.

Der Startpunkt und die Dauer für das Zeitfenster, oder der Endzeitpunkt, können bei der Übermittelung der beiden Server-Telefonnummern an das Telekommunikationsendgerät 1 übermittelt werden. Das erfindungsgemäße Verfahren umfasst hierbei zusätzlich das Setzen eines Zeitfensters durch den Server nach dem Übermitteln der Server-Telefonnummer oder der zweiten Server-Telefonnummer an das Telekommunikationsendgerät 1, innerhalb dessen der Server für das Detektieren der vom Telekommunikationsendgerät 1 an die Server-Telefonnummer und an die zweite Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters umfasst und Übermitteln des Zeitpunktes und der Dauer an das Telekommunikationsendgerät, wobei das Übermitteln des Zeitpunktes und der Dauer im Rahmen der Installation der Anwendungssoftware auf dem Telekommunikationsendgerät 1 oder mit dem Download der Anwendungssoftware erfolgt.

In FIG. 8 ist ein entsprechendes Sequenzdiagramm gezeigt, bei dem auch im Telekommunikations-Endgerät 1 ein oder zwei Zeitfenster für ein rechtzeitiges Absetzen der Sprachruf-Aufbauanfragen sorgen. Analog zu den Ausführungsformen, in welchen nur eine Server-Telefonnummer an das Telekommunikationsendgerät 1 übermittelt wird, wird in Aktivität 16 das Zeitfenster beim Telekommunikationsendgerät 1 gesetzt, wobei das Übermitteln des Zeitpunktes und der Dauer für das Zeitfenster im Rahmen der Installation der Anwendungssoftware auf dem Telekommunikationsendgerät 1 oder mit dem Download der Anwendungssoftware erfolgt. In dieser Ausführungsform bestimmt das Zeitfenster somit nicht nur den Startpunkt und die Dauer für die Bereitschaft der Servers 2 für die Detektion der Sprachruf-Aufbauanfrage an die (erste) Server-Telefonnummer und die zweite Server-Telefonnummer, sondern der Startpunkt und die Dauer bestimmen auch ein Zeitfenster für das Telekommunikationsendgerät 1, eine Sprachruf-Aufbauanfrage an die (erste) Server-Telefonnummer und die zweite Server-Telefonnummer durchzuführen.

Vorteilhaft entspricht auch in dieser Ausführungsform der Startpunkt für das Zeitfenster beim Telekommunikationsendgerät 1 dem Startpunkt für das Zeitfenster beim Server 2 entsprechen. Wird also für den Startpunkt für das Zeitfenster beim Server, wie vorstehend ausgeführt, der Zeitpunkt für das Übermitteln der zweiten Server-Telefonnummer durch den Server 2 an das Telekommunikationsendgerät 1 gewählt, so wird als Startpunkt für das Zeitfenster beim Telekommunikationsendgerät 1 der Zeitpunkt des Empfangs der zweiten Server-Telefonnummer gewählt, der sich in der Regel nur unwesentlich vom Zeitpunkt des Übermittelns der zweiten Server-Telefonnummer unterscheidet.

Auch beim Telekommunikationsendgerät 1 wird bei einer Variante ein gemeinsames Zeitfenster für das Absetzen der beiden Sprachruf-Aufbauanfragen gesetzt, bei einer anderen Variante hingegen zwei gesonderte Zeitfenster für die jeweiligen Sprachruf-Aufbauanfragen.

In einer weiteren Ausführungsform des Verfahrens kann auch die zweite Server-Telefonnummer analog zur (ersten) Server-Telefonnummer erneut ausgewählt werden, damit diese nach dem Abschluss des erfindungsgemäßen Verfahrens wieder zu Verfügung stehen. Das Verfahren umfasst in dieser Ausführungsform zusätzlich das Ermöglichen der erneuten Auswahl der (ersten) Server-Telefonnummer und zweiten Server-Telefonnummer durch den Server, nachdem das Zeitfenster abgelaufen ist, unabhängig davon, ob die übermittelte Herkunftstelefonnummer zu der wenigstens einen Date zugeordnet worden ist, oder das Ermöglichen der erneuten Auswahl der (ersten) Server-Telefonnummer und der zweiten Server-Telefonnummer durch den Server, nachdem die übermittelte Herkunftstelefonnummer zu der wenigstens einen Date zugeordnet worden ist, unabhängig davon, ob das Zeitfenster bereits abgelaufen ist.

In FIG. 9 ist in einen Ablaufdiagramm gezeugt, nach welchen möglichen Situationen im Verfahren es zu einer erneuten Auswahl der bereits in Aktivität ausgewählten (ersten) Server-Telefonnummer und zweiten Server-Telefonnummer kommen kann. Konnte im Rahmen des erfindungsgemäßen Verfahrens eine Zuordnung der Herkunftstelefonnummer zu der Date erfolgen (Beantwortung der Abfrage 114 in FIG. 5 mit "ja"), so haben die in Aktivität 11 ausgewählte (erste) Server-Telefonnummer und die zweite Server-telefonnummer ihren Zweck erfüllt, sind somit wieder frei verfügbar und können in einer Aktivität 115 wieder ausgewählt werden. War es hingegen nicht möglich, die Herkunftstelefonnummer der Date zuzuordnen (Beantwortung der Abfrage 114 in FIG. 5 mit "nein"), so sind nach Ablauf des Zeitfensters 116 die (erste) Server-Telefonnummer und die zweite Server-Telefonnummer ebenfalls wieder frei und können in einer Aktivität 117 ebenfalls wieder ausgewählt werden.

Analog zu den Ausführungsformen, bei welchen nur eine (erste) Server-Telefonnummer übermittelt wird, wird in einer weiteren Ausführungsform des erfindungsgemäßen Verfahrens das Verfahren im Falle des Nicht-Detektierens der an die (erste) Server-Telefonnummer und an die zweite Server-Telefonnummer gerichteten Sprachruf-Aufbauanfragen wiederholt, wobei die Installation der Anwendungssoftware oder der Download der Anwendungssoftware nicht wiederholt wird.

In weiteren Ausführungsformen kann das erfindungsgemäße Verfahren weiter umfassen, dass das Setzen des Zeitfensters wie in der Aktivität 16 in FIG. 4 und 8 gezeigt, zusätzlich das Setzens einer zusätzlichen Dauer, innerhalb deren das Telekommunikationsendgerät 1 nach dem Ablaufen des Zeitfensters keine neue Sprachruf-Aufbauanfrage an die Server-Telefonnummer und/oder die zweite Server-Telefonnummer absetzt umfasst. Damit kann beispielsweise dem Server 2 Zeit gegeben werden, etwa im Falle einer fehlgeschlagenen Zuordnung der Herkunftstelefonnummer zu der Date die Wiederholung oder Erstausführung eines der erfindungsgemäßen Verfahren einzuleiten.

Zur Übermittlung der Herkunftstelefonnummer mit einer Sprachanruf-Aufbauanfrage ist es i.a. nicht nötig, der Aufbauanfrage zu entsprechen und den Sprachanruf tatsächlich aufzubauen. Die Übermittlung der Herkunftstelefonnummer erfolgt vielmehr bereits bei mit der Weiterleitung der Aufbauanfrage an den Server. In einer Ausführungsform kann das erfindungsgemäße Verfahren daher einen Nichtaufbau des Rufes durch den Server 2 im Rahmen des Detektierens der Sprachruf-Aufbauanfrage, wie in Aktivität 12 in den FIG. 2, 3, 4, 6, 7, und 8 gezeigt, umfassen. Dies ermöglicht es für den Nutzer, der eine Anwendungssoftware auf seinem Telekommunikationsendgerät 1 installieren möchte, keine Verbindungsgebühren im Rahmen des Verfahrens anfallen.

In einer weiteren Ausführungsform ist, durch die Installation der Anwendungssoftware oder den Download der Anwendungssoftware durch das Telekommunikationsendgerät 1, ein Datenkommunikationsdialog mit dem Server 2 umfasst, in welchem das Telekommunikationsendgerät 1 eine Benutzeridentifikation an den Server 2 übermittelt, wobei die Benutzeridentifikation von der wenigstens einen Date umfasst wird und wobei das Zuordnen der Herkunftstelefonnummer zu der wenigstens einen Date eine Verifikation der Benutzeridentifikation umfasst. Damit können neben der Zuordnung der Herkunftstelefonnummer zu der Date zusätzliche Schritte zur Verifikation der Benutzeridentität durchgeführt werden.

Die vorgenannten Verfahren können gänzlich automatisiert ablaufen, so dass in keinem Stadium eine Interaktion des Benutzers mit dem Telekommunikationsendgerät 1 erforderlich ist.

Die bisherigen Sequenzdiagramme veranschaulichen das Verfahren aus der Perspektive des Servers 2. Das Sequenzdiagramm von FIG. 10 zeigt nun die in Figur 2 dargestellte Basisvariante des Verfahrens aus der Perspektive des Telekommunikationsendgeräts 1. Es beinhaltet in einer Aktivität 17 das Empfangen einer vom Server 2 übermittelten Server-Telefonnummer durch das Telekommunikationsendgerät 1. Weiter umfasst ist in einer Aktivität 18 das Absetzen einer an die Server-Telefonnummer gerichteten Sprachruf-Aufbauanfrage durch das Telekommunikationsendgerät 1. wobei die Herkunftstelefonnummer mit der Sprachruf-Aufbauanfrage übermittelt wird und wobei Rufnummernübermittlung zumindest für das Absetzen der beiden Sprachanruf-Aufbauanfragen aktiviert ist. Die Aktivierung der Rufnummernübermittlung für das Absetzen der beiden Sprachanruf-Aufbauanfragen erfolgt durch die Anwendungssoftware, und ermöglicht dem Server 2 die Ermittlung der Herkunftstelefonnummer im Rahmen der Detektion der vom Telekommunikationsendgerät 1 abgesetzten Sprachruf-Aufbauanfrage (Aktivität 13 in FIG. 2, 3, 4, 6, 7, und 8).

In FIG 11 ist die Variante von Figur 4 aus der Perspektive des Telekommunikationsendgeräts dargestellt. Sie umfasst das in der Aktivität 18 ausgeführte Absetzen einer an eine Server-Telefonnummer gerichteten Sprachruf-Aufbauanfrage durch das Telekommunikationsendgerät 1 das Absetzen der Sprachruf-Aufbauanfrage innerhalb eines Zeitfensters 19, das einen vom dem Server an das Telekommunikationsendgerät 1 übermittelten Zeitpunkt, ab dem das Zeitfenster zu laufen beginnt und eine von dem Server an das Telekommunikationsendgerät 1 übermittelte Dauer für das Laufen des Zeitfensters, umfasst. Zu Bestimmung des Zeitpunktes und der Dauer des Zeitfensters sei auf die entsprechenden Ausführungen in den obigen Abschnitten verwiesen.

Entsprechend sind in dieser Beschreibung auch die endgerätseitigen Gegenstücke der auf die Serverseite bezogenen Verfahren von Figur 6 und Figur 8 enthalten. Diese enthalten gegenüber den Figuren 10 und 11 als zusätzliche Aktivität nur, dass das Telekommunikations-Endgerät jeweils eine Sprachanruf-Aufbauanfrage an die beiden verschiedenen Server-Telefonnummern richtet, mit denen dieses dem Server 2 jeweils seine Herkunftstelefonnummer mitteilt.

Um die Übermittlung der Herkunftstelefonnummer sicherzustellen, ist es vorteilhaft, dass die Anwendungssoftware die Rufnummernübermittlung beim Telekommunikationsendgerät 1 zumindest für das Absetzen der beiden Sprachanruf-Aufbauanfragen aktiviert.

Ein Computerprogramm, das beispielsweise in einem nicht-volatilen Speicher im Telekommunikationsendgerät 1 gespeichert ist, enthält Anweisungen zum Ausführen einer oder mehrerer der beschriebenen Varianten des Verfahrens zum Ermitteln einer Herkunftstelefonnummer des Telekommunikationsendgeräts 1, wenn es auf dem Telekommunikationsendgerät 1 ausgeführt wird. Das Verfahren umfasst das Lesen einer von einem Server übermittelten Server-Telefonnummer sowie das Absetzen einer an eine Server-Telefonnummer gerichteten Sprachruf-Aufbauanfrage, wobei die Herkunftstelefonnummer mit der Sprachruf-Aufbauanfrage übermittelt wird und wobei Rufnummernübermittelung aktiviert ist. Bei einer Variante sorgt das Computerprogramm beispielsweise dafür, dass das Absetzen der Sprachruf-Aufbauanfrage innerhalb eines Zeitfensters erfolgt, das einen vom dem Server 2 an das Telekommunikationsendgerät 1 übermittelten Zeitpunkt, ab dem das Zeitfenster zu laufen beginnt und eine von dem Server an das Telekommunikationsendgerät übermittelte Dauer für das Laufen des Zeitfensters, oder einen Zeitendpunkt umfasst.

## Patentansprüche

1. Verfahren zum Ermitteln einer Herkunftstelefonnummer eines Telekommunikationsendgeräts und deren Zuordnung zu wenigstens einer Date, die im Rahmen einer Installation einer Anwendungssoftware auf dem Telekommunikationsendgerät an den Server übermittelt wird oder mit einem Download der Anwendungssoftware verknüpft ist oder in der downgeloadeten Anwendungssoftware enthalten ist, durch einen Server, umfassend:

   - Auswählen einer Server-Telefonnummer zum Zwecke der durchzuführenden Zuordnung aus einer Menge von mehreren möglichen Server-Telefonnummern;
   - Übermitteln der Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
   - Detektieren einer vom Telekommunikationsendgerät an die Server-Telefonnummer gerichteten Sprachruf-Aufbauanfrage, wobei die Herkunftstelefonnummer mit der Sprachruf-Aufbauanfrage übermittelt wird;
   - Zuordnen der mit der Sprachruf-Aufbauanfrage übermittelten Herkunftstelefonnummer zu der wenigstens einen Date.

2. Verfahren nach Anspruch 1, wobei das Verfahren weiter umfasst:

- Setzen eines Zeitfensters durch den Server nach dem Übermitteln der Server-Telefonnummer an das Telekommunikationsendgerät, innerhalb dessen der Server für das Detektieren der vom Telekommunikationsendgerät an die Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst oder
- Setzen eines Zeitfensters durch den Server nach dem Übermitteln der Server-Telefonnummer an das Telekommunikationsendgerät, innerhalb dessen der Server für das Detektieren der vom Telekommunikationsendgerät an die Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst und Übermitteln des Zeitpunktes und der Dauer bzw. des Zeitendpunkts bzw. des Zeitendpunkts an das Telekommunikationsendgerät, wobei das Übermitteln des Zeitpunktes und der Dauer bzw. des Zeitendpunkts im Rahmen der Installation der Anwendungssoftware auf dem Telekommunikationsendgerät oder mit dem Download der Anwendungssoftware erfolgt.

**3.** Verfahren nach Anspruch 1 oder 2, wobei das Verfahren weiter umfasst:

- Ermöglichen der erneuten Auswahl der Server-Telefonnummer durch den Server, nachdem das Zeitfenster abgelaufen ist unabhängig davon, ob die übermittelte Herkunftstelefonnummer zu der wenigstens einen Date zugeordnet worden ist, oder
- Ermöglichen der erneuten Auswahl der Server-Telefonnummer durch den Server, nachdem die übermittelte Herkunftstelefonnummer der wenigstens einen Date zugeordnet worden ist unabhängig davon, ob das Zeitfenster bereits abgelaufen ist.

**4.** Verfahren nach einem der Ansprüche 1 bis 3, wobei das Verfahren im Falle des Nicht-Detektierens der an die Server-Telefonnummer gerichteten Sprachruf-Aufbauanfrage wiederholt wird, wobei die Installation der Anwendungssoftware oder der Download der Anwendungssoftware nicht wiederholt wird.

**5.** Verfahren nach Anspruch 1, wobei das Verfahren weiter umfasst:

- Auswählen einer zweiten Server-Telefonnummer zum Zwecke der durchzuführenden Zuordnung aus einer Menge von mehreren möglichen Server-Telefonnummern;
- Übermitteln der zweiten Server-Telefonnummer an das Telekommunikationsendgerät über Datenkommunikation, nicht aber auf dem Wege eines Anrufs an das Telekommunikationsendgerät, wobei das Übermitteln im Rahmen der Installation der Anwendungssoftware auf dem Telekommunikationsendgerät oder mit dem Download der Anwendungssoftware erfolgt;
- Detektieren einer vom Telekommunikationsendgerät an die zweite Server-Telefonnummer gerichteten Sprachruf-Aufbauanfrage, wobei die Herkunftstelefonnummer mit der Sprachruf-Aufbauanfrage übermittelt wird;
- Zuordnen der mit der Sprachruf-Aufbauanfrage übermittelten Herkunftstelefonnummer zu der wenigstens einen Date.

**6.** Verfahren nach Anspruch 5, wobei das Verfahren weiter umfasst:

- Setzen eines Zeitfensters durch den Server nach dem Übermitteln der Server-Telefonnummer oder der zweiten Server-Telefonnummer an das Telekommunikationsendgerät, innerhalb dessen der Server für das Detektieren der vom Telekommunikationsendgerät an die Server-Telefonnummer und an die zweite Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst oder
- Setzen eines Zeitfensters durch den Server nach dem Übermitteln der Server-Telefonnummer oder der zweiten Server-Telefonnummer an das Telekommunikationsendgerät, innerhalb dessen der Server für das Detektieren der vom Telekommunikationsendgerät an die Server-Telefonnummer und an die zweite Server-Telefonnummer gerichteten Sprachruf-Aufbauanfrage bereit ist und wobei das Setzen des Zeitfensters das Setzen eines Zeitpunktes, ab dem das Zeitfenster zu laufen beginnt und das Setzen einer Dauer für das Laufen des Zeitfensters, oder eines Zeitendpunkts umfasst und Übermitteln des Zeitpunktes und der Dauer bzw. des Zeitendpunkts an das Telekommunikationsendgerät, wobei das Übermitteln des Zeitpunktes und der Dauer bzw. des Zeitendpunkts im Rahmen der Installation der Anwendungssoftware auf dem Telekommunikationsendgerät oder mit dem Download der Anwendungssoftware erfolgt.

**7.** Verfahren nach Anspruch 5 oder 6, wobei das Verfahren weiter umfasst:

- Ermöglichen der erneuten Auswahl der Server-Telefonnummer und zweiten Server-Telefonnummer durch den Server, nachdem das Zeitfenster abgelaufen ist unabhängig davon, ob die übermittelte Herkunftstelefonnummer zu der wenigstens einen Date zugeordnet worden ist, oder
- Ermöglichen der erneuten Auswahl der Server-Telefonnummer und der zweiten Server-Telefonnummer durch den Server, nachdem die übermittelte Herkunftstelefonnummer zu der wenigstens einen Date zugeordnet worden ist unabhängig davon, ob das Zeitfenster bereits abgelaufen ist.

**8.** Verfahren nach einem der Ansprüche 5 bis 7, wobei das Verfahren im Falle des Nicht-Detektierens der an die Server-Telefonnummer gerichteten Sprachruf-Aufbauanfrage und der an die zweite Server-Telefonnummer gerichteten Sprachruf-Aufbauanfrage wiederholt wird, wobei die Installation der Anwendungssoftware oder der Download der Anwendungssoftware nicht wiederholt wird.

**9.** Verfahren nach einen der Ansprüche 5 bis 8, wobei dem Verfahren ein zusätzliches Verfahren nach den Ansprüchen 1 bis 4 vorangestellt oder nachgestellt wird.

**10.** Verfahren nach einem der Ansprüche 1 bis 9, weiter umfassend:

- Umfassen, durch das Setzen des Zeitfensters, des Setzens einer zusätzlichen Dauer, innerhalb deren das Telekommunikationsendgerät nach dem Ablaufen des Zeitfensters keine neue Sprachruf-Aufbauanfrage an die Server-Telefonnummer und/oder die zweite Server-Telefonnummer absetzt; und/oder
- Umfassen, durch das Detektieren der Sprachruf-Aufbauanfrage, eines Nichtaufbaus des Rufes durch den Server; und/oder
- Umfassen, durch die Installation der Anwendungssoftware oder den Download der Anwendungssoftware durch das Telekommunikationsendgerät, eines Datenkommunikationsdialoges mit dem Server, in welchem das Telekommunikationsendgerät eine Benutzeridentifikation an den Server übermittelt, wobei die Benutzeridentifikation von der wenigstens einen Date umfasst wird und wobei das Zuordnen der Herkunftstelefonnummer zu der wenigstens einen Date eine Verifikation der Benutzeridentifikation umfasst.

**11.** Verfahren zum Übermitteln einer Herkunftstelefonnummer eines Telekommunikationsendgeräts an einen Server durch das Telekommunikationsendgerät, umfassend:

- Empfangen einer von einem Server übermittelten Server-Telefonnummer;
- Absetzen einer an die Server-Telefonnummer gerichteten Sprachruf-Aufbauanfrage, wobei die Herkunftstelefonnummer mit der Sprachruf-Aufbauanfrage übermittelt wird und wobei Rufnummernübermittlung aktiviert ist.

**12.** Verfahren nach Anspruch 11, wobei das Absetzen einer an eine Server-Telefonnummer gerichteten Sprachruf-Aufbauanfrage das Absetzen der Sprachruf-Aufbauanfrage innerhalb eines Zeitfensters umfasst, wobei das Zeitfenster einen vom dem Server an das Telekommunikationsendgerät übermittelten Zeitpunkt, ab dem das Zeitfenster zu laufen beginnt und eine von dem Server an das Telekommunikationsendgerät übermittelte Dauer für das Laufen des Zeitfensters, oder eines Zeitendpunkts umfasst.

**13.** Computerprogramm, umfassend Anweisungen zum Ausführen, wenn das Computerprogramm auf einem Telekommunikationsendgerät ausgeführt wird, eines Verfahrens zum Ermitteln einer Herkunftstelefonnummer des Telekommunikationsendgeräts, umfassend:

- Lesen einer von einem Server übermittelten Server-Telefonnummer;
- Absetzen einer an eine Server-Telefonnummer gerichteten Sprachruf-Aufbauanfrage, wobei die Herkunftstelefonnummer mit der Sprachruf-Aufbauanfrage übermittelt wird und wobei Rufnummernübermittelung aktiviert ist.

**14.** Computerprogramm nach Anspruch 13 wobei das Absetzen einer an eine Server-Telefonnummer gerichteten Sprachruf-Aufbauanfrage das Absetzen der Sprachruf-Aufbauanfrage innerhalb eines Zeitfensters umfasst, wobei das Zeitfenster einen vom dem Server an das Telekommunikationsendgerät übermittelten Zeitpunkt, ab dem das Zeitfenster zu laufen beginnt und eine von dem Server an das Telekommunikationsendgerät übermittelte Dauer für das Laufen des Zeitfensters, umfasst.

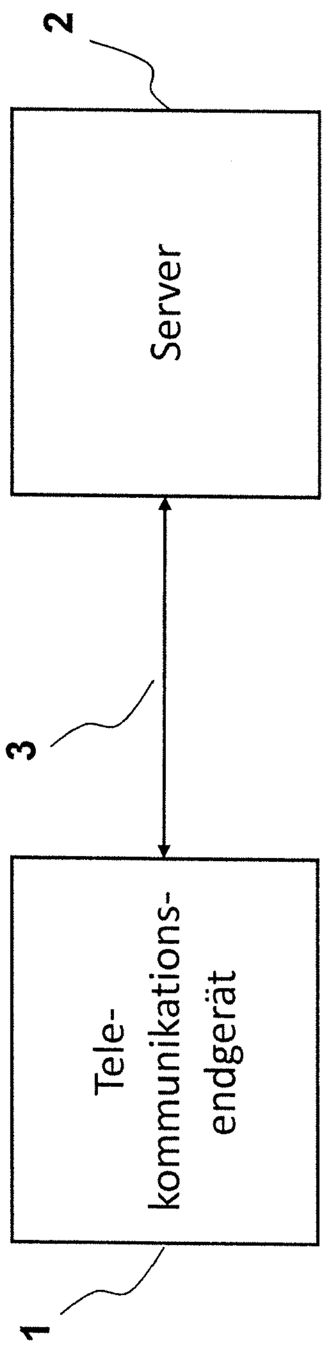


FIG. 1

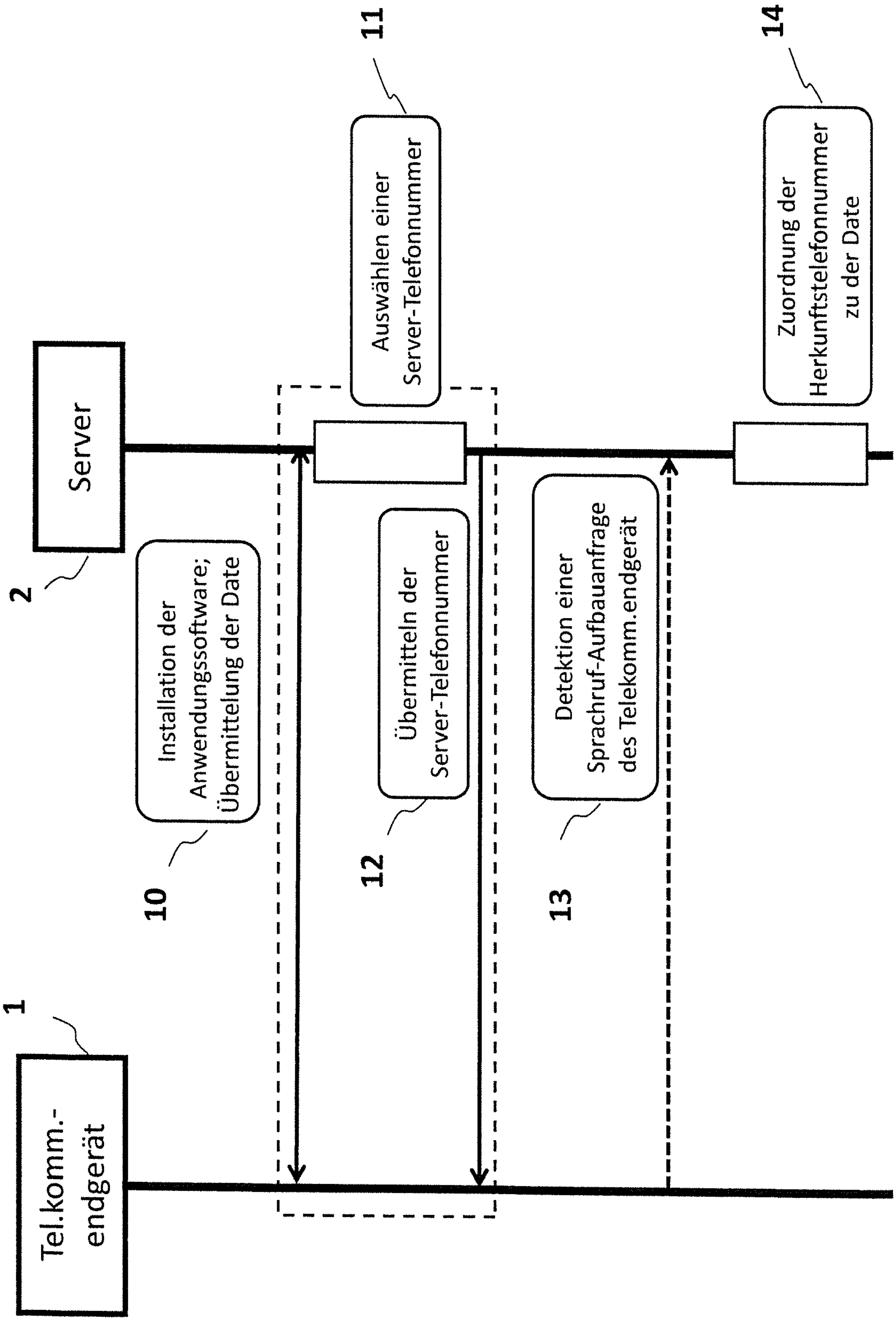
Tel.komm.-endgerät
1
Server
2
Installation der Anwendungssoftware; Übermittelung der Date
10
Auswählen einer Server-Telefonnummer
11
Übermitteln der Server-Telefonnummer
12
Detektion einer Sprachruf-Aufbauanfrage des Telekomm.endgerät
13
Zuordnung der Herkunftstelefonnummer zu der Date
14

FIG. 2

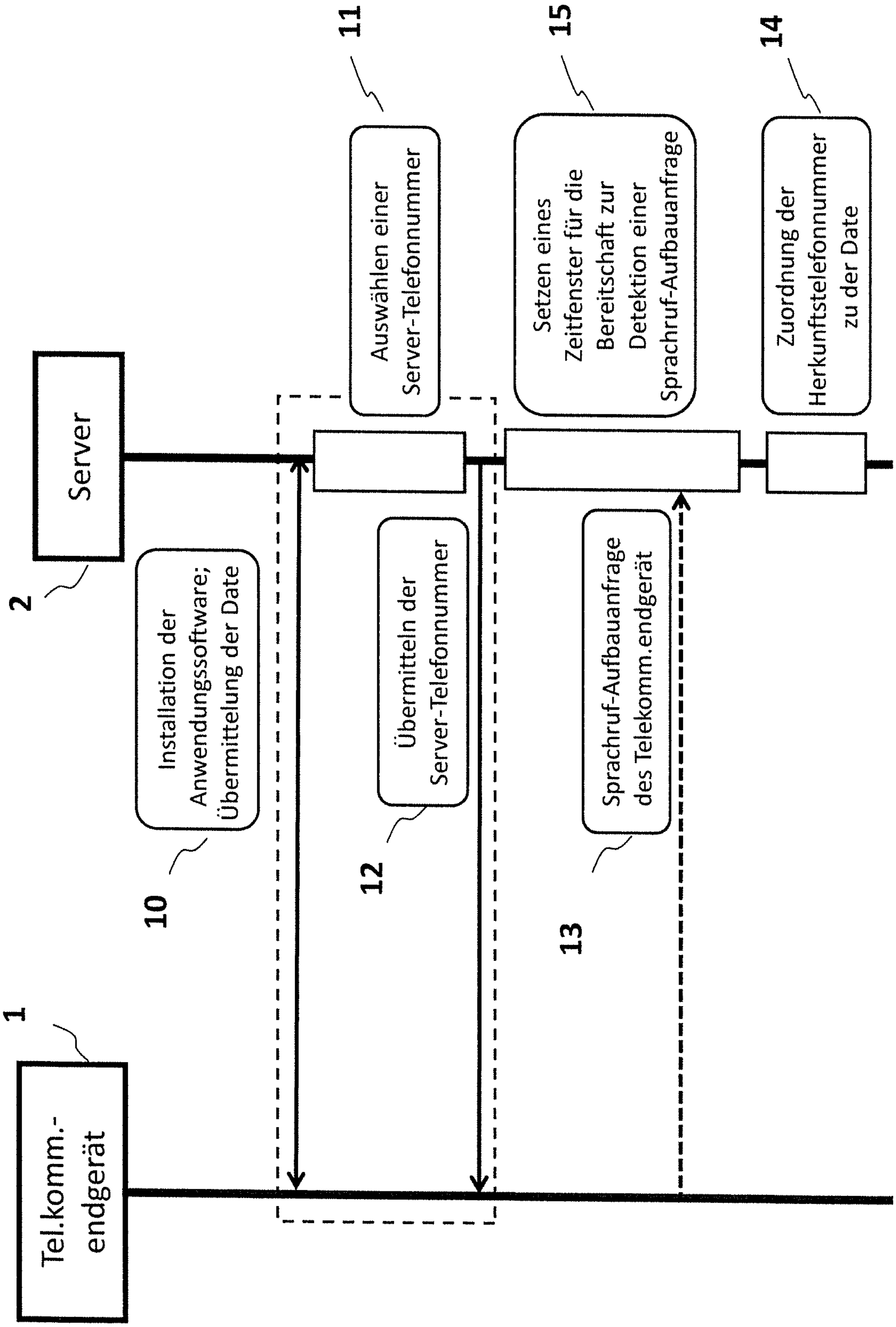
Tel.komm.-endgerät
1
Server
2
Installation der Anwendungssoftware; Übermittelung der Date
10
Auswählen einer Server-Telefonnummer
11
Übermitteln der Server-Telefonnummer
12
Setzen eines Zeitfenster für die Bereitschaft zur Detektion einer Sprachruf-Aufbauanfrage
15
Sprachruf-Aufbauanfrage des Telekomm.endgerät
13
Zuordnung der Herkunftstelefonnummer zu der Date
14

FIG. 3

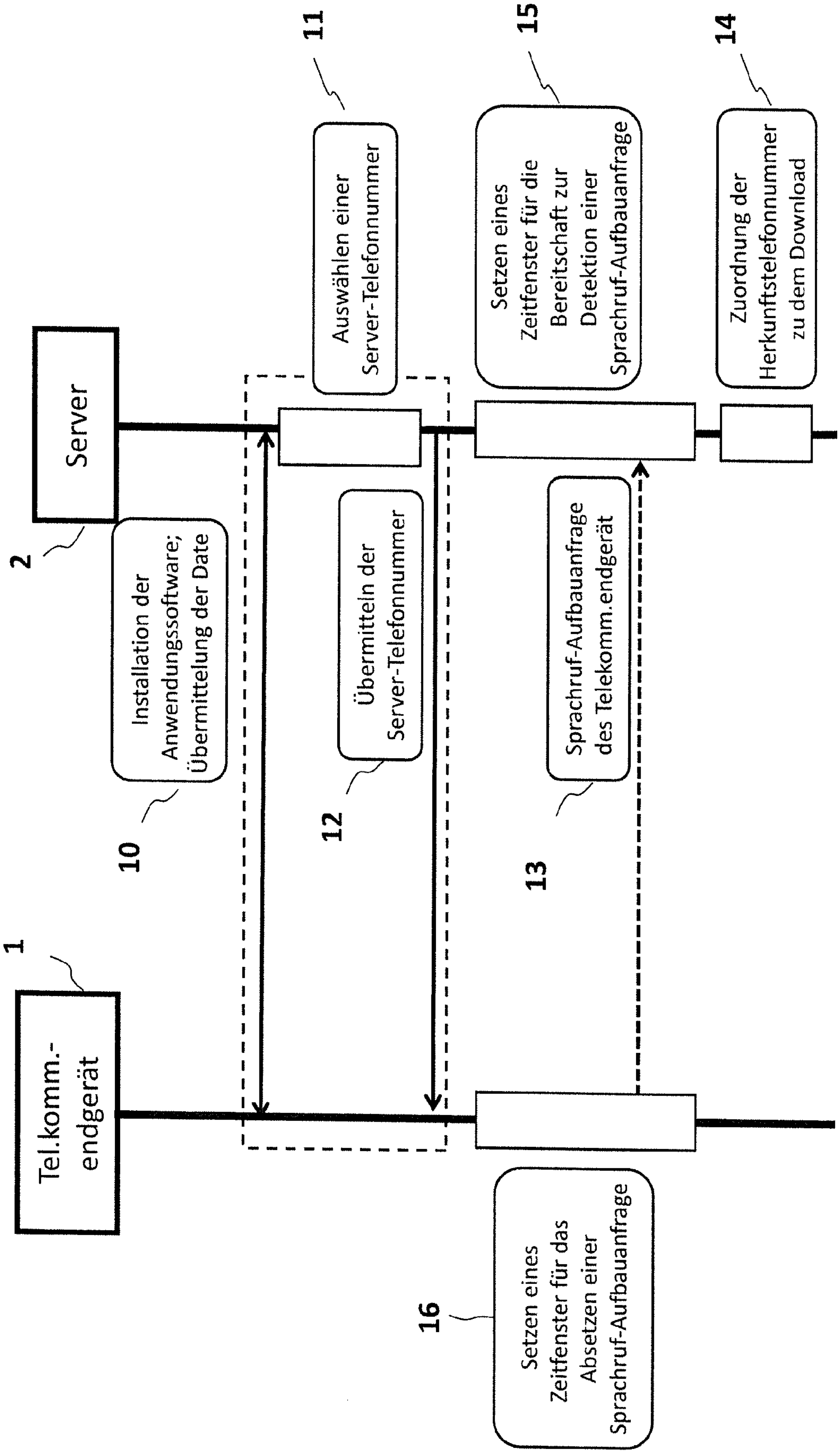
Tel.komm.-
endgerät
1
Server
2
Installation der
Anwendungssoftware;
Übermittelung der Date
10
Auswählen einer
Server-Telefonnummer
11
Übermitteln der
Server-Telefonnummer
12
Sprachruf-Aufbauanfrage
des Telekomm.endgerät
13
Setzen eines
Zeitfenster für die
Bereitschaft zur
Detektion einer
Sprachruf-Aufbauanfrage
15
Zuordnung der
Herkunftstelefonnummer
zu dem Download
14
Setzen eines
Zeitfenster für das
Absetzen einer
Sprachruf-Aufbauanfrage
16

FIG. 4

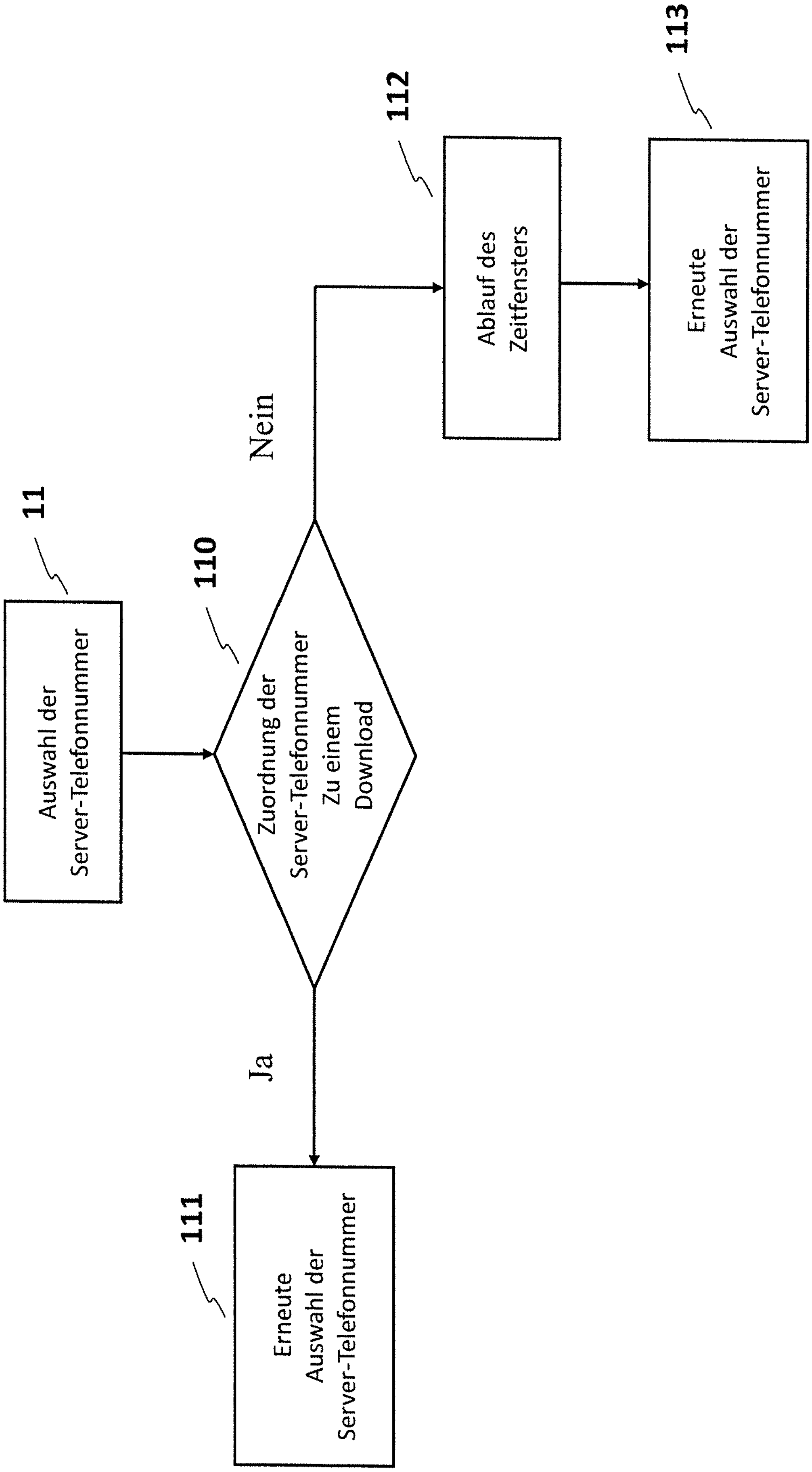
11
Auswahl der Server-Telefonnummer
110
Zuordnung der Server-Telefonnummer Zu einem Download
Ja
111
Erneute Auswahl der Server-Telefonnummer
Nein
112
Ablauf des Zeitfensters
113
Erneute Auswahl der Server-Telefonnummer

FIG. 5

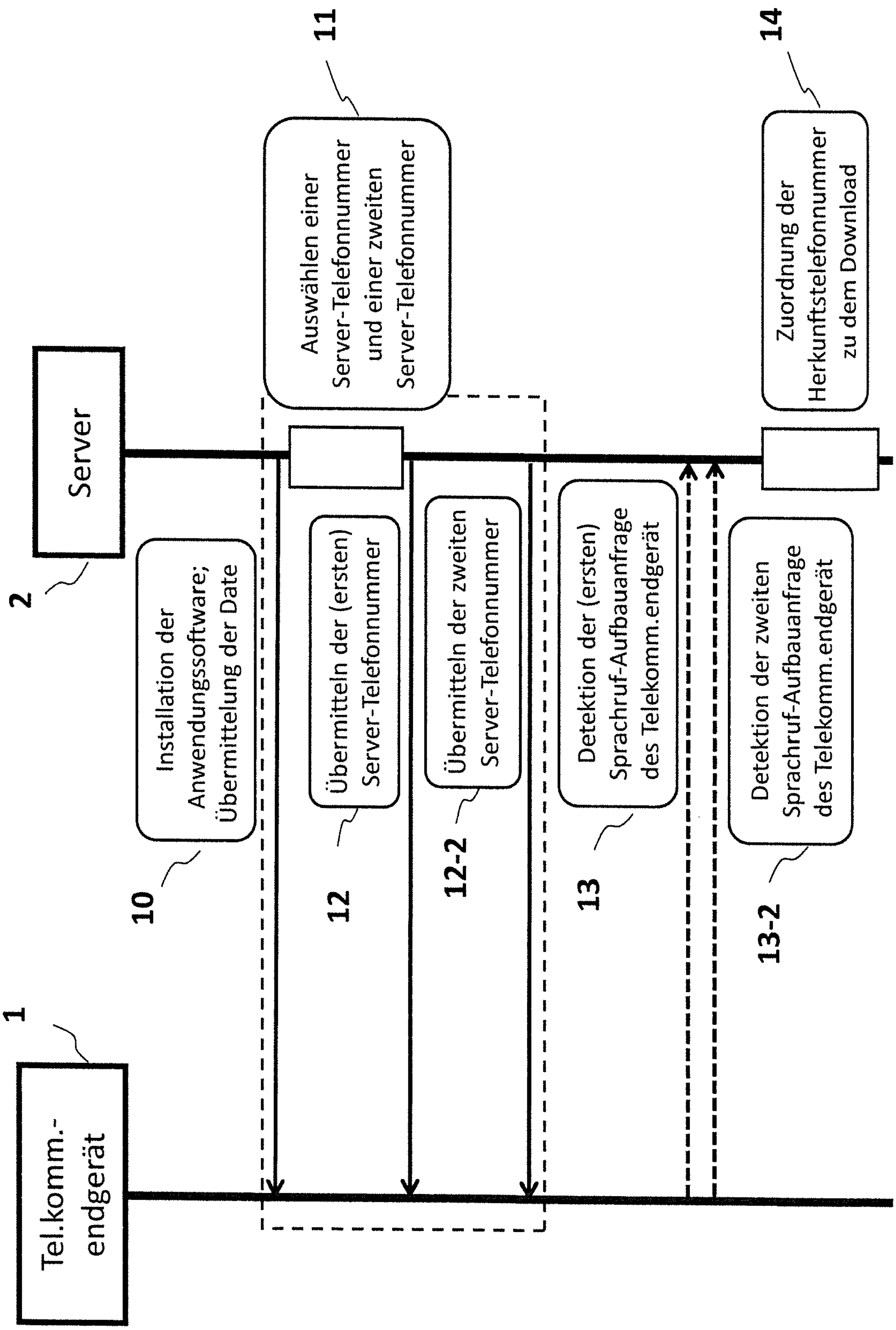
Tel.komm.-endgerät
1
Server
2
10
Installation der Anwendungssoftware; Übermittelung der Date
11
Auswählen einer Server-Telefonnummer und einer zweiten Server-Telefonnummer
12
Übermitteln der (ersten) Server-Telefonnummer
12-2
Übermitteln der zweiten Server-Telefonnummer
13
Detektion der (ersten) Sprachruf-Aufbauanfrage des Telekomm.endgerät
13-2
Detektion der zweiten Sprachruf-Aufbauanfrage des Telekomm.endgerät
14
Zuordnung der Herkunftstelefonnummer zu dem Download

FIG. 6

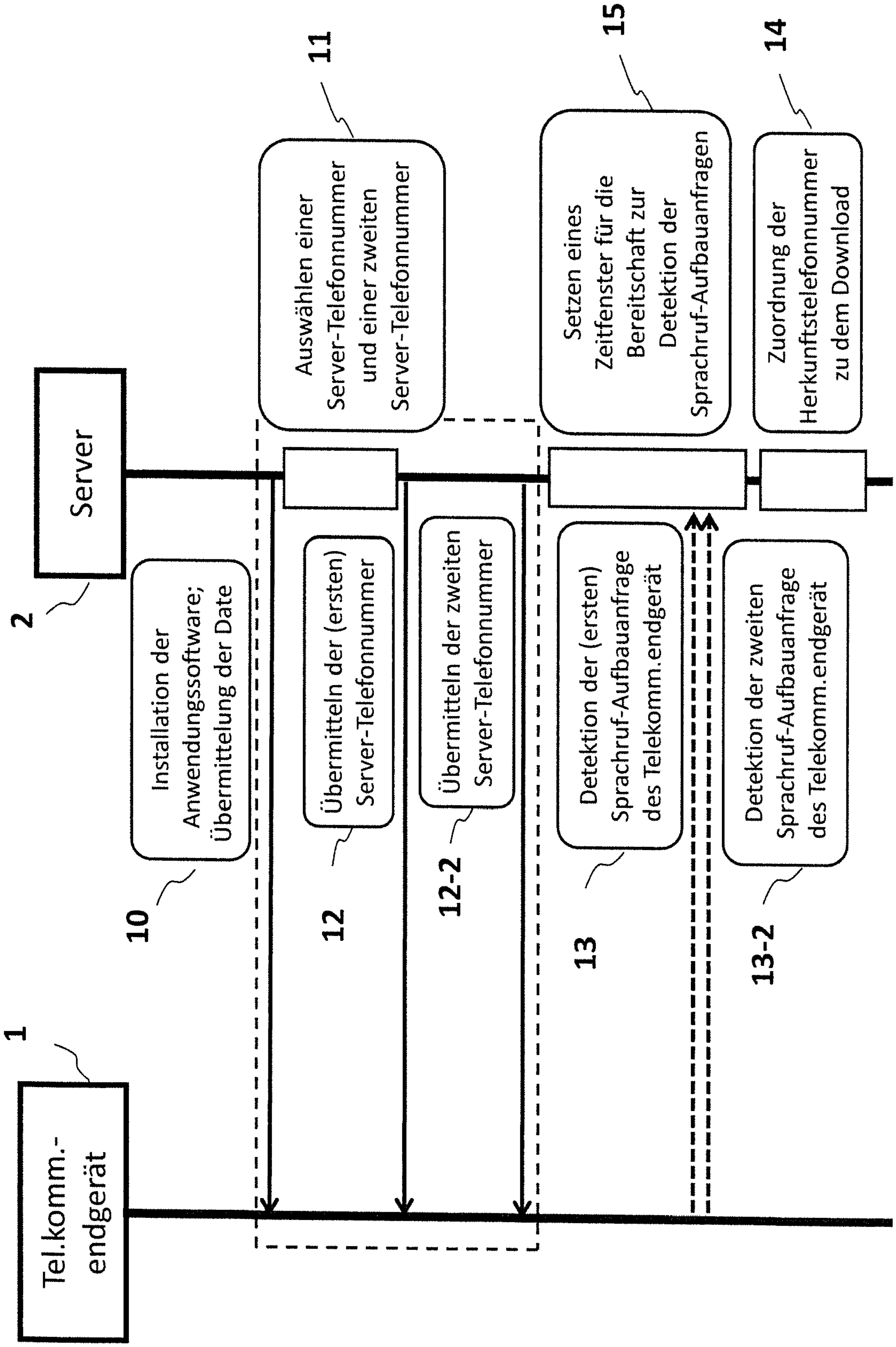
Tel.komm.-
endgerät
1
Server
2
Installation der
Anwendungssoftware;
Übermittelung der Date
10
Auswählen einer
Server-Telefonnummer
und einer zweiten
Server-Telefonnummer
11
Übermitteln der (ersten)
Server-Telefonnummer
12
Übermitteln der zweiten
Server-Telefonnummer
12-2
Setzen eines
Zeitfenster für die
Bereitschaft zur
Detektion der
Sprachruf-Aufbauanfragen
15
Detektion der (ersten)
Sprachruf-Aufbauanfrage
des Telekomm.endgerät
13
Zuordnung der
Herkunftstelefonnummer
zu dem Download
14
Detektion der zweiten
Sprachruf-Aufbauanfrage
des Telekomm.endgerät
13-2

FIG. 7

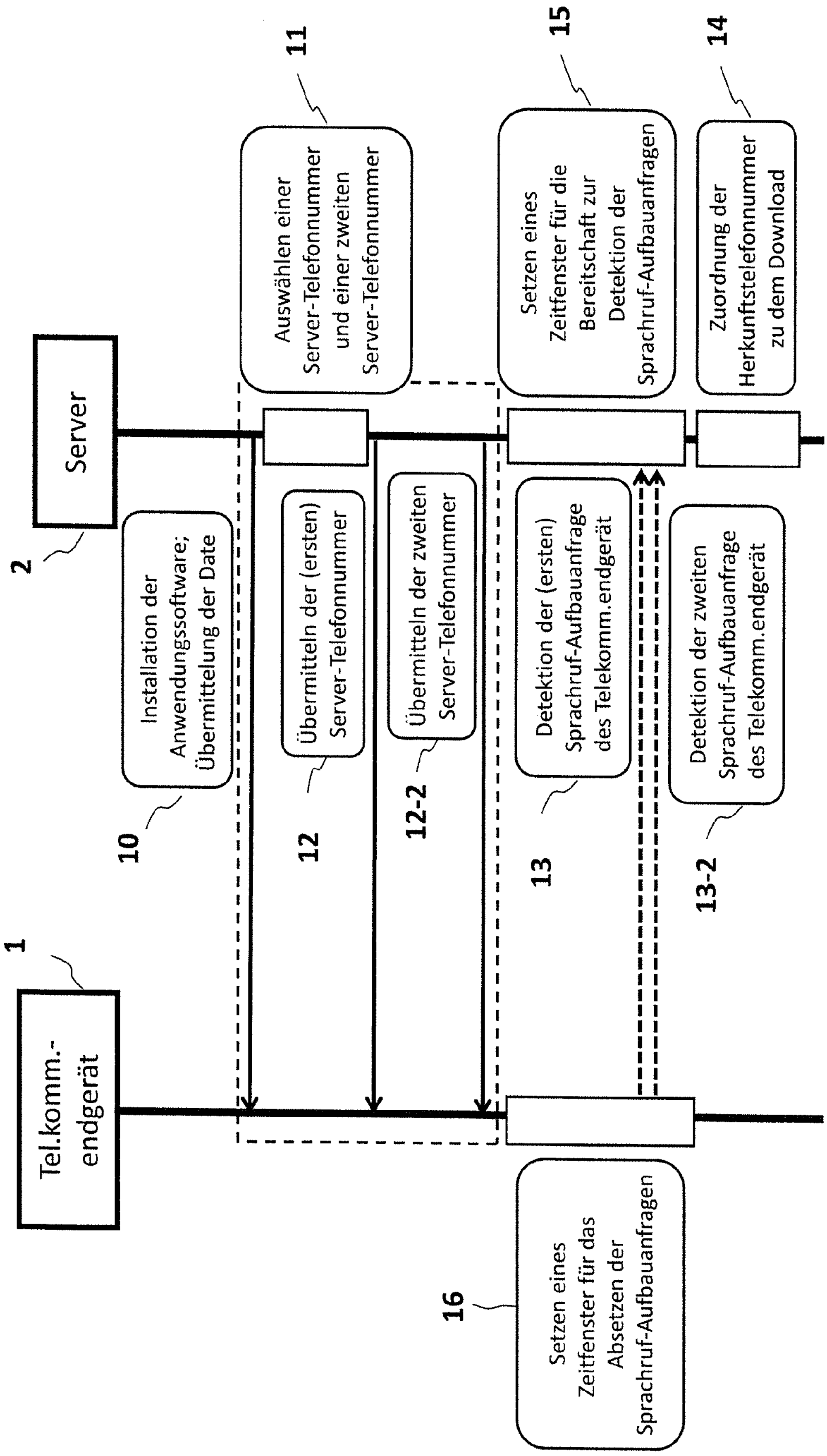
Tel.komm.-
endgerät
1
Server
2
Installation der
Anwendungssoftware;
Übermittelung der Date
10
Auswählen einer
Server-Telefonnummer
und einer zweiten
Server-Telefonnummer
11
Übermitteln der (ersten)
Server-Telefonnummer
12
Übermitteln der zweiten
Server-Telefonnummer
12-2
Detektion der (ersten)
Sprachruf-Aufbauanfrage
des Telekomm.endgerät
13
Detektion der zweiten
Sprachruf-Aufbauanfrage
des Telekomm.endgerät
13-2
Setzen eines
Zeitfenster für die
Bereitschaft zur
Detektion der
Sprachruf-Aufbauanfragen
15
Zuordnung der
Herkunftstelefonnummer
zu dem Download
14
Setzen eines
Zeitfenster für das
Absetzen der
Sprachruf-Aufbauanfragen
16

FIG. 8

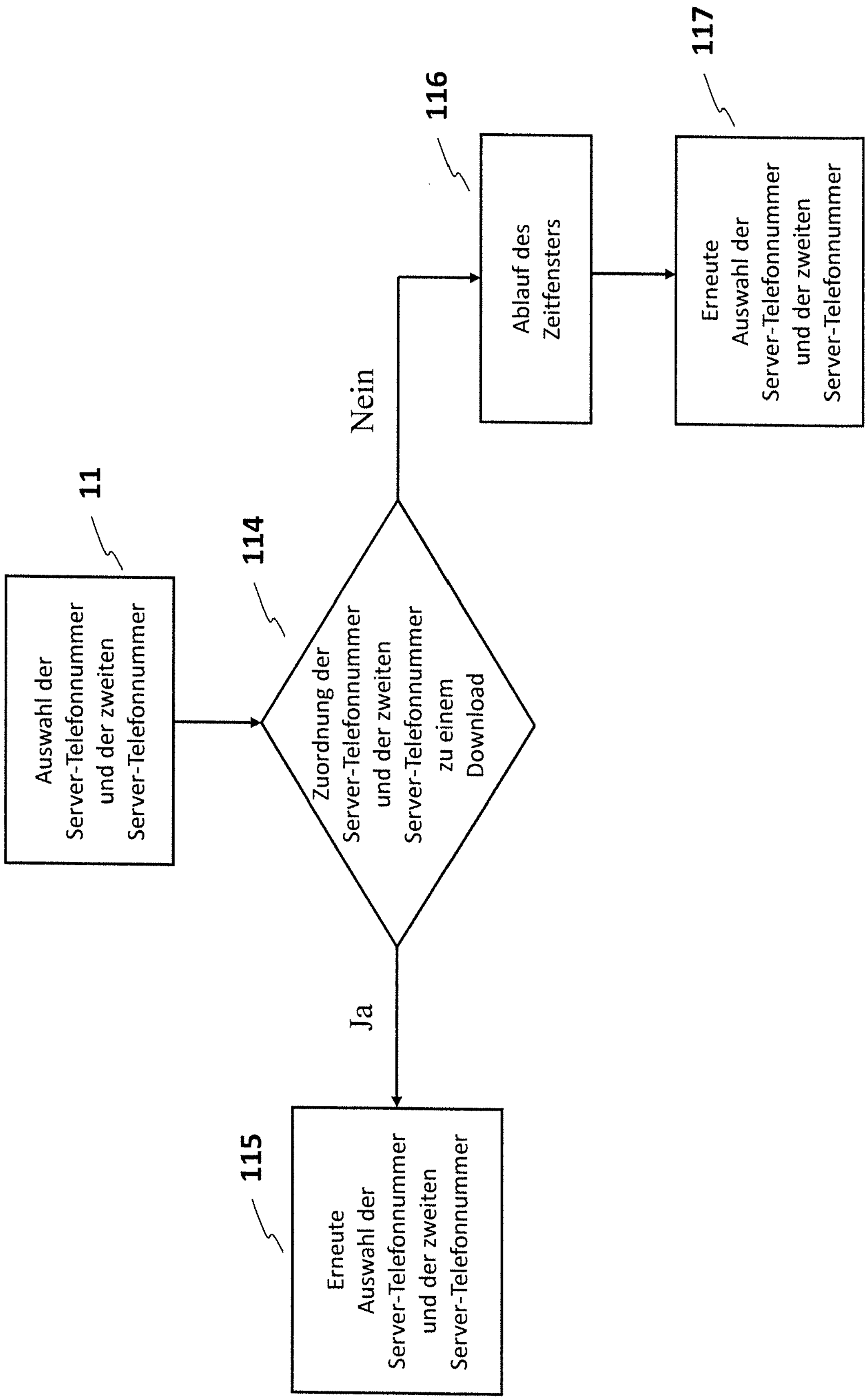
11
Auswahl der Server-Telefonnummer und der zweiten Server-Telefonnummer
114
Zuordnung der Server-Telefonnummer und der zweiten Server-Telefonnummer zu einem Download
Nein
116
Ablauf des Zeitfensters
117
Erneute Auswahl der Server-Telefonnummer und der zweiten Server-Telefonnummer
Ja
115
Erneute Auswahl der Server-Telefonnummer und der zweiten Server-Telefonnummer

FIG. 9

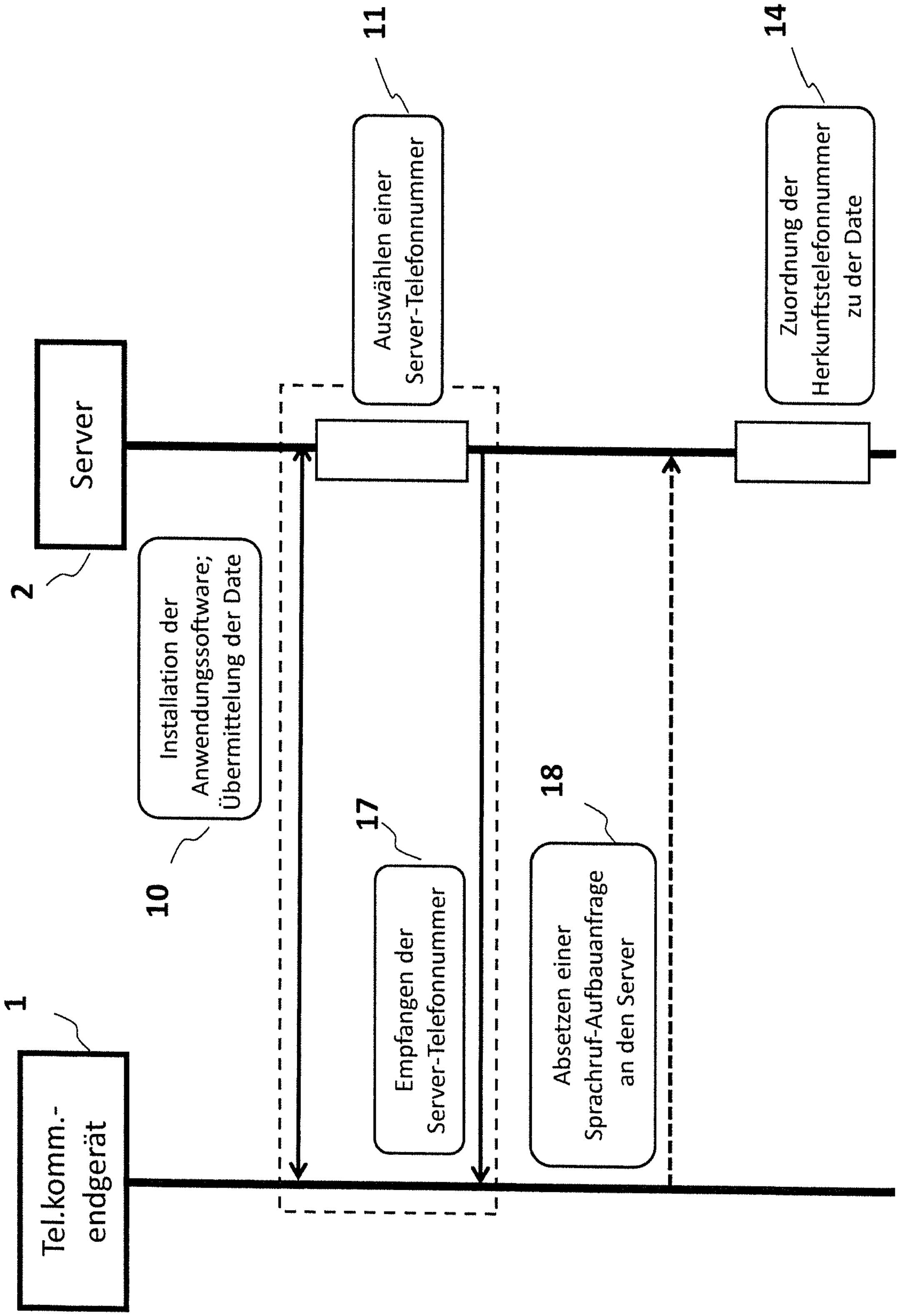
Tel.komm.-endgerät
1
Server
2
Installation der Anwendungssoftware; Übermittelung der Date
10
Auswählen einer Server-Telefonnummer
11
Empfangen der Server-Telefonnummer
17
Absetzen einer Sprachruf-Aufbauanfrage an den Server
18
Zuordnung der Herkunftstelefonnummer zu der Date
14

FIG. 10

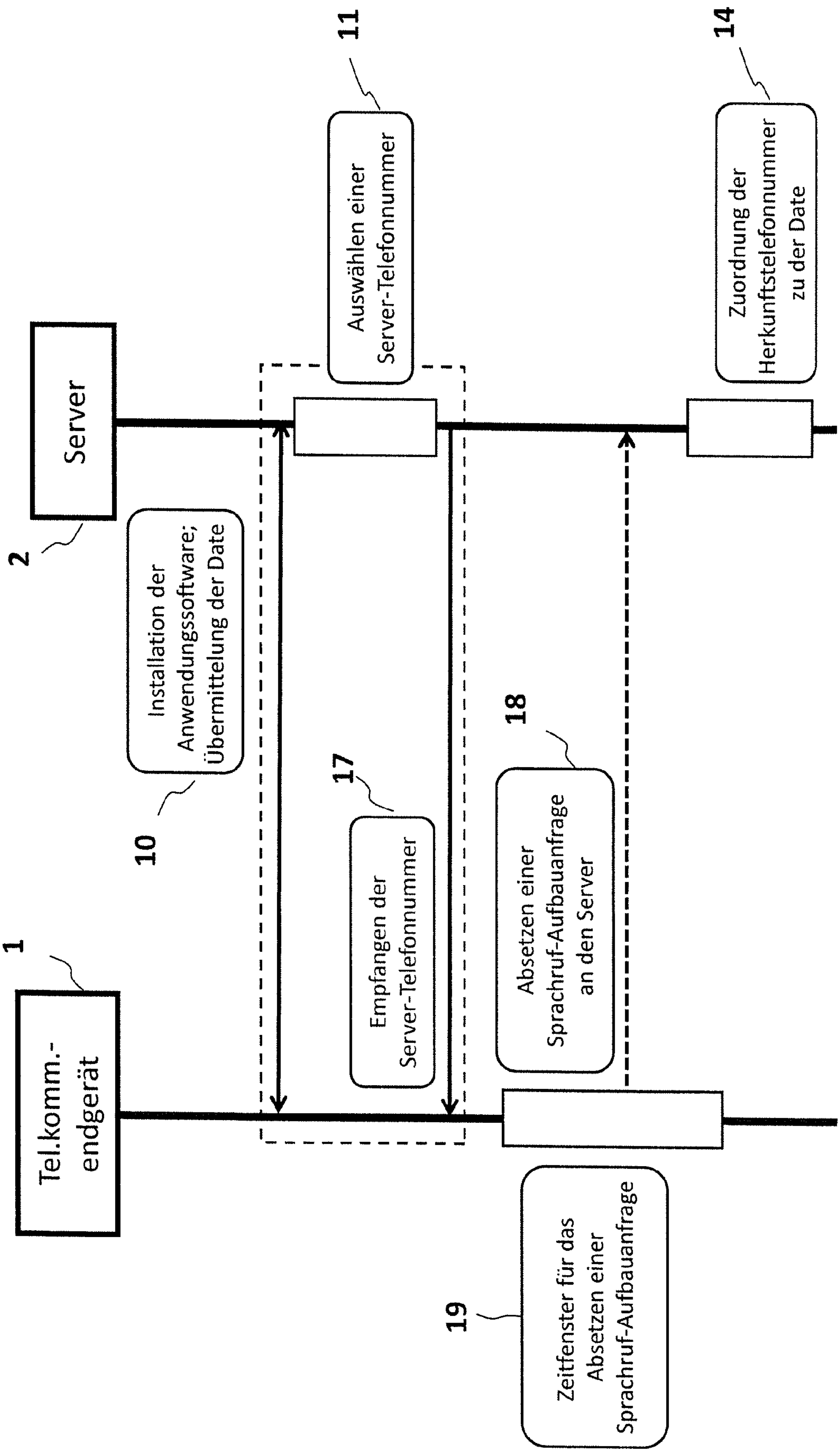
11
14
Auswählen einer Server-Telefonnummer
Zuordnung der Herkunftstelefonnummer zu der Date
2
Server
Installation der Anwendungssoftware; Übermittelung der Date
10
17
Empfangen der Server-Telefonnummer
18
Absetzen einer Sprachruf-Aufbauanfrage an den Server
1
Tel.komm.-endgerät
19
Zeitfenster für das Absetzen einer Sprachruf-Aufbauanfrage

FIG. 11

Europäisches Patentamt
European Patent Office
Office européen des brevets

# EUROPÄISCHER RECHERCHENBERICHT

Nummer der Anmeldung
EP 20 16 9014

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/335822 A1 (JAIN MEHUL [US]) 13. November 2014 (2014-11-13) * Absatz [0082] * * Absatz [0106] * * Absatz [0187] * * Absatz [0298] - Absatz [0332] * ----- | 1-14 | INV. H04L29/06 |
| X | JP 2016 018550 A (BANKGUARD CO LTD) 1. Februar 2016 (2016-02-01) | 1,11,13 | |
| A | * Absatz [0001] - Absatz [0004] * ----- | 2-10,12, 14 | |
| | | | RECHERCHIERTE SACHGEBIETE (IPC) |
| | | | H04L |

Der vorliegende Recherchenbericht wurde für alle Patentansprüche erstellt

1

| Recherchenort | Abschlußdatum der Recherche | Prüfer |
|---|---|---|
| Den Haag | 26. August 2020 | Gutiérrez García, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 16 9014

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-08-2020

| Im Recherchenbericht angeführtes Patentdokument | Datum der Veröffentlichung | Mitglied(er) der Patentfamilie | Datum der Veröffentlichung |
|---|---|---|---|
| US 2014335822 A1 | 13-11-2014 | KEINE | |
| JP 2016018550 A | 01-02-2016 | KEINE | |

EPO FORM P0461

Für nähere Einzelheiten zu diesem Anhang : siehe Amtsblatt des Europäischen Patentamts, Nr.12/82